# EUROPÄISCHE PATENTSCHRIFT

(11) **EP 2 356 346 B1**
(45) Veröffentlichungstag und Bekanntmachung des Hinweises auf die Patenterteilung: **16.07.2014**
(21) Anmeldenummer: 09798870.3
(22) Anmeldetag: 13.11.2009
(51) Int. Cl.: F16C 25/08

(54) **LAGEREINHEIT, INSBESONDERE ZUR LAGERUNG EINES LAUFRADES, EINER SPINDEL ODER EINES ANDEREN MASCHINENAGGREGATS**
BEARING UNIT, ESPECIALLY FOR MOUNTING A RUNNING WHEEL, A SPINDLE, OR ANOTHER MACHINE UNIT
UNITÉ DE PALIER, EN PARTICULIER POUR SUPPORTER UNE ROUE, UNE BROCHE OU UN AUTRE GROUPE D'UNE MACHINE

(30) Priorität: 13.11.2008 DE 102008057195
(43) Veröffentlichungstag der Anmeldung: 17.08.2011
(73) Patentinhaber: Schaeffler Technologies GmbH & Co. KG, 91074 Herzogenaurach (DE)
(72) Erfinder: DIZLEK, Timur, 97421 Schweinfurt (DE); KRETZER, Norbert, 97422 Schweinfurt (DE); ZYLLA, Josef, 97453 Schonungen (DE)
(86) Internationale Anmeldenummer: PCT/DE2009/001595
(87) Internationale Veröffentlichungsnummer: WO 2010/054640

(56) Entgegenhaltungen:
- EP-A1- 0 332 497
- DE-A1-102004 048 720
- US-A- 5 316 393

## Beschreibung

### Gebiet der Erfindung

Die Erfindung betrifft eine Lagereinheit, insbesondere zur Lagerung eines Laufrades, einer Spindel oder eines anderen Maschinenaggregats, umfassend ein Wälzlager mit einem um eine Drehachse rotierbaren inneren Lagerring und einem äußeren Lagerring, zwischen welchen mehrere Wälzkörper angeordnet sind, wobei zwischen einer Stirnseite einer der Lagerringe und eines gegenüberliegend angeordneten Federaufnahmerings Druckfederelemente vorgesehen sind derart, dass der eine Lagerring und der Federaufnahmering gegen die Federkraft der Druckfederelemente in Axialrichtung zueinander verschieblich sind, wobei Befestigungselemente vorgesehen sind, über welche der Federaufnahmering an dem einen Lagerring gesichert ist.

### Hintergrund der Erfindung

Aus der Lagertechnik sind federvorgespannte Loslagereinheiten mit einem Wälzlager für eine axial genau zu führende Welle wie z.B. ein Laufrad oder eine Spindel bekannt, bei denen an einer Stirnseite beispielsweise des äußeren Lagerrings mehrere Federn zum Vorspannen des Wälzlagers angeordnet sind. Durch die Federn werden zudem die Wälzkörper sicher im Druckwinkel gehalten. Zusätzlich gleichen die Federn Fertigungsfehler an den Bauteilen oder Längenausdehnungen an der Welle durch den Temperatureinfluss aus.

Eine solche Lagereinheit ist beispielsweise aus der DE 10 2004 048 720 A1 bekannt. Das in diesem Dokument beschriebene Kugellager weist einen äußeren Lagerring auf, auf dem eine Rückstellfederkraft mehrerer Druckschraubenfedern wirkt. Die Druckschraubenfedern sind zwischen dem äußeren Lagerring und einem axial gegenüber angeordneten Federdruckring angeordnet. Der Federdruckring weist an seiner dem äußeren Lagerring zugewandten Seitenfläche mehrere gleichmäßig zueinander beabstandete axiale Grundbohrungen auf, in denen jeweils das eine Ende der Druckschraubenfedern aufgenommen ist. Ergänzend dazu weist der Lagerring an seiner dem Federdruckring zugewandten Seitenfläche die gleiche Anzahl axialer Grundbohrungen wie der Federdruckring auf, in denen jeweils das andere Ende der Druckschraubenfedern aufgenommen ist.

Solche Loslagereinheiten werden für gewöhnlich ohne Federdruckring, weiterhin Federaufnahmering genannt, hergestellt und verkauft. Meistens fertigt der Kunde selbst ein Gegenstück zum Abstützen der Federn. Dabei kann bei solchen Lagereinheiten das Problem auftreten, dass bei der Montage des Lagers die nichtabgestützten Federn herausfallen können.

### Aufgabe der Erfindung

Der Erfindung liegt die Aufgabe zugrunde, eine sichere Positionierung der Federn einer federvorgespannten Lagereinheit anzugeben.

### Lösung der Aufgabe

Die Aufgabe wird erfindungsgemäß gelöst durch eine Lagereinheit, insbesondere zur Lagerung eines Laufrades, einer Spindel oder eines anderen Maschinenaggregats, umfassend ein Wälzlager mit einem um eine Drehachse rotierbaren inneren Lagerring und einem äußeren Lagerring, zwischen welchen mehrere Wälzkörper angeordnet sind, wobei zwischen einer Stirnseite eines der Lagerringe und einem gegenüberliegend angeordneten Federaufnahmering Druckfederelemente vorgesehen sind derart, dass der eine Lagerring und der Druckaufnahmering gegen die Federkraft der Druckfederelemente in Axialrichtung zueinander verschieblich sind und wobei Befestigungselemente vorgesehen sind, über welche der Federaufnahmering an dem einen Lagerring gesichert ist, dadurch gekennzeichnet, dass als Befestigungselemente Schrauben eingesetzt sind.

Die Erfindung basiert auf der Überlegung, dass eine sichere Positionierung der Druckfederelemente erfolgt, indem der Federaufnahmering am Lagerring gesichert ist, so dass die Druckfederelemente über den Federaufnahmering gehalten werden und nicht herausfallen können. Die Lagereinheit umfassend das Wälzlager, die Druckfederelemente und den Federaufnahmering stellt somit eine vorgefertigte Montageeinheit dar, die in dieser Form vertrieben und eingesetzt wird. Im montierten Zustand der Lagereinheit ist die Position des Federaufnahmerings fest und das Wälzlager kann sich gegen die Rückstellkraft der Druckfederelemente in Bezug auf den Federaufnahmering und ein Gehäuse der Werkzeugmaschine verschieben. Die Befestigungselemente sind dabei derart ausgestaltet, dass sie eine relative Bewegung des Lagerrings in Bezug auf den Federaufnahmering gegen die Federkraft der Druckfederelemente ermöglichen, d.h. es liegt keine starre Verbindung zwischen dem Lagerring und dem Federaufnahmering vor. Die Vorspannung der einbaufertigen federvorgespannten Lagereinheit kann dabei individuell z.B. über die Anzahl und Orientierung der Druckfederelemente eingestellt werden.

Gemäß einer bevorzugten Ausgestaltung ist vorgesehen, dass zur Einstellung der Vorspannung der Druckfederelemente der Abstand zwischen dem Lagerring und dem Federaufnahmering einstellbar ist. Neben der Anzahl und Orientierung der Druckfederelemente kann somit die Vorspannung auf besonders einfache Weise über dem Abstand zwischen dem Lagerring und dem Federaufnahmering beeinflusst werden.

Bevorzugt ist dabei der Abstand zwischen dem Lagerring und dem Federaufnahmering mit Hilfe der Befestigungselemente einstellbar. Dank der Befestigungselemente erfolgt eine sehr genaue Einstellung der Vorspannung der Lagereinheit. Durch die Befestigungselemente wird ein maximaler Abstand zwischen dem Lagerring und dem Federaufnahmering vorgegeben und dieser Abstand kann gegen die Federkraft der Druckfederelemente beim Einsatz des Wälzlagers verringert werden.

Erfindungsgemäß sind als Befestigungselemente Schrauben eingesetzt. Schrauben ermöglichen eine sichere Befestigung des Federaufnahmerings am Lagerring und eine genaue Einstellung des Abstands zwischen dem Lagerring und dem Federaufnahmering und sind zudem leicht zum Handhaben.

Gemäß einer bevorzugten Variante weist der Federaufnahmering Bohrungen für die Befestigungselemente auf. Dies stellt eine besonders platzsparende Lösung dar, da die Befestigungselemente nicht von außen am Federaufnahmering am Lagerring eingreifen, sondern durch den Federaufnahmering geführt sind.

Gemäß einer weiteren bevorzugten Variante weisen die Bohrungen am Federaufnahmering eine Schraubenkopfaufnahme auf, deren Grund ein Widerlager für einen Schraubenkopf bildet. Die Schraubenkopfaufnahme stellt insbesondere eine Erweiterung der zylinderförmigen Bohrung für die Schraube dar. Durch den Anschlag des Schraubenkopfes gegen den Grund der Schraubenkopfaufnahme wird somit der maximale Abstand zwischen dem Lagerring und dem Federaufnahmering definiert. Zugleich ist ein Verschieben des Federaufnahmerings gegen die Rückstellkraft der Druckfederelemente möglich.

Bevorzugt ist eine Tiefe der Schraubenkopfaufnahme größer als eine Höhe des Schraubenkopfs. Die Differenz entspricht vorzugsweise einem vorgesehenen maximalen Verstellweg für die Einstellung der Vorspannung. Die Tiefe beträgt beispielsweise das 2-fache der Höhe des Schraubenkopfs. Idealerweise entspricht der Abstand zwischen dem Schraubenkopf und der äußeren Oberfläche des Federaufnahmerings dem Abstand zwischen dem Lagerring und dem Federaufnahmering. In diesem Fall bleibt der Schraubenkopf stets in der Schraubenkopfaufnahme, auch wenn der Federaufnahmering gegen die Rückstellkraft der Druckfederelemente vollständig gegen den Lagerring gedrückt ist und gegen ihn anschlägt. Hierdurch wird gewährleistet, dass bei einer Verschiebung des Federaufnahmerings in Richtung auf den Lagerring der Schraubenkopf nicht aus der Ebene des Federaufnahmerings herausragt.

Vorteilhafterweise weist der Lagerring an seiner Stirnseite Aufnahmen für die Befestigungselemente auf. Diese Aufnahmen sind komplementär zu den Bohrungen am Federaufnahmering in Bezug auf ihre Anzahl und Anordnung. Die Aufnahmen sind insbesondere mit einem Innengewinde versehen, so dass der Gewindeschaft der Schrauben in die Aufnahmen eingeschraubt werden kann.

Gemäß einer vorteilhaften Ausgestaltung sind die Druckfederelemente Druckschraubfedern. Druckschraubfedern stellen eine besonders einfache und effiziente Art von Druckfederelementen dar und können leicht in unterschiedlichen Größen hergestellt werden.

Im Hinblick auf eine besonders sichere Verbindung des Federaufnahmerings mit dem Lagerring sind bevorzugt mehrere, vorzugsweise vier Befestigungselemente vorgesehen, welche zueinander gleichverteilt, beispielsweise unter einem Winkel von 90° zueinander angeordnet sind. Demnach liegen vier Stützpunkte vor, die den gleichen Abstand zueinander aufweisen und sorgen somit für eine besonders gleichmäßige Verteilung der Kräfte beim Verbinden des Federaufnahmerings mit dem Lagerring.

Zur Erhöhung der Sicherheit der Verbindung zwischen dem Federaufnahmering und dem Lagerring sind die Befestigungselemente vorzugsweise am Lagerring gegen ein Lösen gesichert. Die Sicherung der Befestigungselemente gegen ein Lösen erfolgt beispielsweise indem die Enden der Befestigungselemente in den Aufnahmen am Lagerring verklebt sind. Wenn Schrauben als Befestigungselemente eingesetzt werden, wird dadurch verhindert, dass sich die Schrauben lockern.

Gemäß einer vorteilhaften Ausgestaltung ist auf einer äußeren Umfangsseite des Lagerrings vorzugsweise eine reibungsvermindernde Beschichtung aufgebracht. Der Lagerring kann beispielsweise dünnschichtverchromt, Zink-Phosphat-beschichtet oder PTFE-beschichtet sein, um die Schiebefunktion des Wälzlagers im Gehäuse zu gewährleisten bzw. zu verbessern. Es liegt dabei eine möglichst dauerhafte, leichtgängige Axialverschiebung des Wälzlagers im Gehäuse vor.

### Kurze Beschreibung der Zeichnung

Ein Ausführungsbeispiel der Erfindung wird anhand einer Zeichnung näher erläutert. Hierin zeigen:
- Fig. 1: In einer perspektivischen Darstellung eine Loslagereinheit,
- Fig. 2: in einer Halbschnittdarstellung einen Axialschnitt durch die Ebene A-A gemäß Fig. 1, und
- Fig. 3: in einer Halbschnittdarstellung einen Axialschnitt durch die Ebene B-B gemäß Fig. 1.

Gleiche Bezugszeichen haben in den verschiedenen Figuren die gleiche Bedeutung.

### Ausführliche Beschreibung der Zeichnung

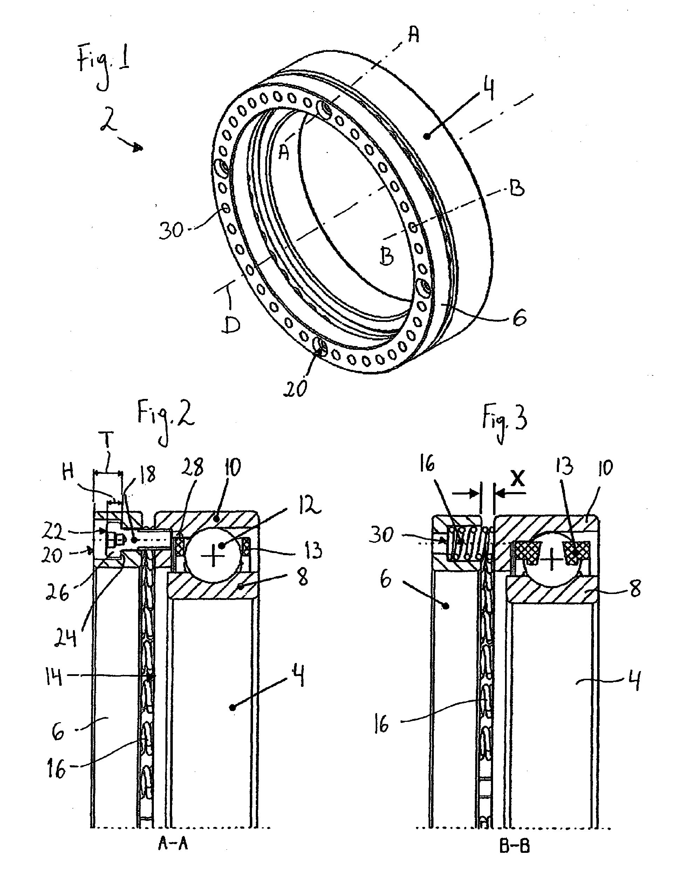

In den Figuren 1 bis 3 ist eine federvorgespannte Lagereinheit 2 gezeigt, die im Wesentlichen ein Wälzlager 4 und eine Federaufnahme 6 umfasst. Das Wälzlager 4 wird zur Lagerung einer hier nicht näher gezeigten Spindel einer Werkzeugmaschine eingesetzt. Die Spindel ist zum Beispiel eine Spindel für eine Fräsmaschine, die durch eine hydraulische Antriebseinheit oder durch einen Elektromotor angetrieben wird.

Das Wälzlager 4 umfasst einen um eine Drehachse D rotierbaren inneren Lagerring 8 und einen äußeren Lagerring 10. Zwischen dem inneren Lagerring 8 und dem äußeren Lagerring 10 sind mehrere Wälzkörper 12 angeordnet und von einem Käfig 13 gehalten. Die Wälzkörper 12 sind im gezeigten Ausführungsbeispiel nach Art von Kugeln gebildet und derart positioniert, dass das Wälzlager 4 ein Schrägkugellager ist. Je nach Anwendungsfall kann der Wälzlager 4 mit einer Spaltdichtung und einer hier nicht näher gezeigten Kunststoffdichtung ausgeführt sein.

Zwischen einer Stirnseite 14 des äußeren Lagerrings 10 und dem Federaufnahmering 6 sind Druckfederelemente 16 nach Art von Druckschraubenfedern angeordnet, welche eine Vorspannkraft zwischen dem äußeren Lagerring und dem Federaufnahmering 6 erzeugen. Der Federaufnahmering 6 und der äußere Lagerring 10 können dabei gegen die Rückstellkraft der Druckfederelemente 16 in Axialrichtung relativ zueinander bewegt werden. Im eingebauten Zustand der Lagereinheit 2 in der Werkzeugmaschine wird die Position des Federaufnahmerings 6 zum Beispiel durch einen hier nicht gezeigten Sprengring in Bezug auf ein Gehäuse der Werkzeugmaschine fixiert. Im Einsatz der Lagereinheit 2 kann somit lediglich das Wälzlager 4 gegen die Rückstellkraft der Druckfederelemente 16 in Richtung auf den Federaufnahmering 6 zu verschoben werden. Dabei gleitet das Wälzlager 4 gegen das Gehäuse. Damit das Gleiten des Außenrings 10 gegenüber dem Gehäuse der Werkzeugmaschine erleichtert wird, ist auf der Umfangsseite des äußeren Lagerrings 10 eine nicht näher dargestellte reibungsvermindernde Beschichtung, zum Beispiel aus Zink-Phosphat, aufgebracht.

Um eine sichere Befestigung des Federaufnahmerings 6 am Lagerring 4 zu gewährleisten, sind Befestigungselemente 18 vorgesehen, welche den Federaufnahmering 6 mit dem äußeren Lagerring 4 verbinden. Die Befestigungselemente 18 sind in diesem Ausführungsbeispiel Schrauben, die den Federaufnahmering 6 und den äußeren Lagerring 10 zusammenhalten, so dass die Druckfederelemente 16 gegen axiale und radiale Verschiebung bzw. gegen Herausfallen gesichert sind. Der Federweg und damit die Vorspannkraft der Lagereinheit 2 sind dabei durch den Spalt X zwischen dem Federaufnahmering 6 und dem äußeren Lagerring 10 definiert.

Zur Durchführung der Schrauben 18 sind in dem Federaufnahmering 6 Bohrungen 20 vorgesehen. Die Bohrungen 20, wie insbesondere aus Fig. 2 ersichtlich, weisen eine Schraubenkopfaufnahme 22 auf, deren Grund 24 ein Widerlager für einen Schraubenkopf 26 der Schraube 18 bildet. Eine Tiefe T der Schraubenkopfaufnahme 22 ist dabei etwa um das 2-fache größer als eine Höhe H des Schraubenkopfs 26. Insbesondere entspricht der Abstand zwischen dem Schraubenkopf 26 und der dem Wälzlager 4 abgewandten Seite des Federaufnahmerings 6 einem Abstand X zwischen dem Federaufnahmering und dem äußeren Lagerring 10 (T-H=X), so dass der Schraubenkopf 26, auch wenn der Federaufnahmering gegen den äußeren Lagerring 10 dicht gedrückt ist, immer noch nicht aus der Schraubenkopfaufnahme 22 herausragt. Komplementär zu den Bohrungen 20 weist der äußere Lagerring 10 an seiner Stirnseite 14 Aufnahmen 28 für ein Gewindeende der Schrauben 18 auf. Damit die Schrauben 18 gegen ein Lösen gesichert sind, sind ihre Gewindeenden außerdem in den Aufnahmen 28 verklebt.

Wie aus Fig. 1 ersichtlich ist, sind vier Schrauben 18 vorgesehen, die nach Art eines gleicharmigen Kreuzes um die Drehachse D angeordnet sind und jeweils einen Winkel von 90° zueinander schließen.

Die Einstellung der Vorspannung der Druckfederelemente 16 erfolgt über den Abstand X zwischen dem äußeren Lagerring 10 und dem Federaufnahmering 6. Dabei gilt, dass je kleiner der Abstand X ist, desto größer ist die Vorspannung der Lagereinheit 2. Der Abstand X zwischen dem Federaufnahmering 6 und dem äußeren Lagerring 10 wird dabei mit Hilfe der Schrauben 18 festgesetzt.

An der dem Wälzlager 4 zugewandten Seite des Federaufnahmerings 6 sind außerdem eine Vielzahl von Aufnahmetaschen 30 ausgebildet, in welchen die Druckschraubfedern 16 einzeln eingeführt sind. Im gezeigten Ausführungsbeispiel gemäß Fig. 3 weisen die Aufnahmetaschen 30 an ihrem Grund eine Durchgangsbohrung mit reduziertem Durchmesser auf. An der Seite des Federaufnahmerings 6 sind die Druckschraubfedern 16 in die Aufnahmetaschen 30 eingeführt und an der Seite des äußeren Lagerrings 10 stützten sich die Druckfederelemente 16 gegen die Stirnseite 14 des äußeren Lagerrings 10 ab. Alternativ ist es auch möglich, auch an dem äußeren Lagerring 10 Aufnahmetaschen für die Druckschraubfedern 16 vorzusehen.

In Abhängigkeit von der Einbauumgebung kann der äußere Lagerring 10 außerdem verbreitert ausgeführt werden, damit die Stützfunktion des Wälzlagers 4 in dem Gehäuse der Werkzeugmaschine verbessert ist. Durch die breitere Ausführung des Wälzlagers 4 wird auch ein Verkannten des äußeren Lagerrings 10 verhindert.

### Liste der Bezugszahlen

- 2: Lagereinheit
- 4: Wälzlager
- 6: Federaufnahmering
- 8: innerer Lagerring
- 10: äußerer Lagerring
- 12: Wälzkörper
- 13: Käfig
- 14: Stirnseite
- 16: Druckfederelement
- 18: Befestigungselement
- 20: Bohrung
- 22: Schraubenkopfaufnahme
- 24: Grund der Schraubenkopfaufnahme
- 26: Schraubenkopf
- 28: Aufnahme
- 30: Aufnahmetasche

- A-A: Schnittebene
- B-B: Schnittebene
- D: Drehachse
- H: Höhe des Schraubenkopfes
- T: Tiefe der Schraubenkopfaufnahme
- X: Abstand

## Patentansprüche

1. Lagereinheit (2), insbesondere zur Lagerung eines Laufrades, einer Spindel oder eines anderen Maschinenaggregats, umfassend ein Wälzlager (4) mit einem um eine Drehachse (D) rotierbaren inneren Lagerring (8) und einem äußeren Lagerring (10), zwischen welchen mehrere Wälzkörper (12) angeordnet sind, wobei zwischen einer Stirnseite (14) eines der Lagerringe (8, 10) und einem gegenüberliegend angeordneten Federaufnahmering (6) Druckfederelemente (16) vorgesehen sind derart, dass der eine Lagerring und der Federaufnahmering (6) gegen die Federkraft der Druckfederelemente (16) in Axialrichtung zueinander verschieblich sind,
wobei Befestigungselemente (18) vorgesehen sind, über welche der Federaufnahmering (6) an dem einen Lagerring gesichert ist, **dadurch gekennzeichnet, dass** als Befestigungselemente (18) Schrauben eingesetzt sind.

2. Lagereinheit (2) nach Anspruch 1,
**dadurch gekennzeichnet, dass** zur Einstellung der Vorspannung der Druckfederelemente (16) der Abstand (X) zwischen dem Lagerring (8, 10) und dem Federaufnahmering (6) einstellbar ist.

3. Lagereinheit (2) nach Anspruch 2,
wobei der Abstand (X) zwischen dem Lagerring (8, 10) und dem Federaufnahmering (6) mit Hilfe der Befestigungselemente (18) einstellbar ist.

4. Lagereinheit (2) nach einem der vorhergehenden Ansprüche,
**dadurch gekennzeichnet, dass** der Federaufnahmering (6) Bohrungen (20) für die Befestigungselemente (18) aufweist.

5. Lagereinheit (2) nach Anspruch 4,
**dadurch gekennzeichnet, dass** die Bohrungen (20) eine Schraubenkopfaufnahme (22) aufweisen, deren Grund (24) ein Widerlager für einen Schraubenkopf (26) bildet.

6. Lagereinheit (2) nach Anspruch 5,
**dadurch gekennzeichnet, dass** eine Tiefe (T) der Schraubenkopfaufnahme (22) größer ist als eine Höhe (H) des Schraubenkopfs (26).

7. Lagereinheit (2) nach einem der vorhergehenden Ansprüche,
**dadurch gekennzeichnet, dass** der Lagerring (8, 10) an seiner Stirnseite (14) Aufnahmen (28) für die Befestigungselemente (18) aufweist.

8. Lagereinheit (2) nach einem der vorhergehenden Ansprüche,
**dadurch gekennzeichnet, dass** die Befestigungselemente (18) am Lagerring (8, 10) gegen ein Lösen gesichert sind.

9. Lagereinheit (2) nach einem der vorhergehenden Ansprüche,
**dadurch gekennzeichnet, dass** zumindest auf einer äußeren Umfangsseite des äußeren Lagerrings (10) eine reibungsvermindernde Beschichtung aufgebracht ist.

## Claims

1. Bearing unit (2), especially for mounting a running wheel, a spindle or another machine unit, comprising a rolling bearing (4) with an inner bearing ring (8) rotatable about an axis of rotation (D) and with an outer bearing ring (10), between which a plurality of rolling bodies (12) are arranged, compression-spring elements (16) being provided between one end face (14) of one of the bearing rings (8, 10) and an oppositely arranged spring reception ring (6), in such a way that the one bearing ring and the spring reception ring (6) are displaceable with respect to one another in the axial direction counter to the spring force of the compression-spring elements (16), fastening elements (18) being provided, via which the spring reception ring (6) is secured to the one bearing ring, **characterized in that** screws are used as fastening elements (18).

2. Bearing unit (2) according to Claim 1, **characterized in that**, to set the prestress of the compression-spring elements (16), the distance (X) between the bearing ring (8, 10) and the spring reception ring (6) can be set.

3. Bearing unit (2) according to Claim 2,
wherein the distance (X) between the bearing ring (8, 10) and the spring reception ring (6) is capable of being set with the aid of the fastening elements (18).

4. Bearing unit (2) according to one of the preceding claims,
**characterized in that** the spring reception ring (6) has bores (20) for the fastening elements (18).

5. Bearing unit (2) according to Claim 4, **characterized in that** the bores (20) have a screw-head receptacle (22), the bottom (24) of which forms an abutment for a screw head (26).

6. Bearing unit (2) according to Claim 5, **characterized in that** a depth (T) of the screw-head receptacle (22) is greater than a height (H) of the screw head (26).

7. Bearing unit (2) according to one of the preceding claims,
**characterized in that** the bearing ring (8, 10) has on its end face (14) receptacles (28) for the fastening elements (18).

8. Bearing unit (2) according to one of the preceding claims,
**characterized in that** the fastening elements (18) are secured against release on the bearing ring (8, 10).

9. Bearing unit (2) according to one of the preceding claims,
**characterized in that** a friction-reducing coating is applied at least on an outer circumferential side of the outer bearing ring (10).

## Revendications

1. Unité de palier (2), en particulier pour le support d'une roue mobile, d'une broche ou d'un autre groupe d'une machine, comprenant un palier à roulement (4) avec une bague de palier intérieure (8) pouvant tourner autour d'un axe de rotation (D) et une bague de palier extérieure (10), entre lesquelles sont disposés plusieurs corps de roulement (12), des éléments de ressort de pression (16) étant prévus entre un côté frontal (14) de l'une des bagues de palier (8, 10) et une bague de réception de ressort (6) disposée à l'opposé, de telle sorte que l'une des bagues de palier et la bague de réception de ressort (6) puissent être déplacées l'une par rapport à l'autre dans la direction axiale à l'encontre de la force de ressort des éléments de ressort de pression (16),
des éléments de fixation (18) étant prévus, par le biais desquels la bague de réception de ressort (6) est fixée sur ladite bague de palier, **caractérisée en ce que** des vis sont utilisées en tant qu'éléments de fixation (18).

2. Unité de palier (2) selon la revendication 1, **caractérisée en ce que** pour l'ajustement de la précontrainte des éléments de ressort de pression (16), la distance (X) entre la bague de palier (8, 10) et la bague de réception de ressort (6) peut être ajustée.

3. Unité de palier (2) selon la revendication 2,
la distance (X) entre la bague de palier (8, 10) et la bague de réception de ressort (6) pouvant être ajustée à l'aide des éléments de fixation (18).

4. Unité de palier (2) selon l'une quelconque des revendications précédentes,
**caractérisée en ce que** la bague de réception de ressort (6) présente des alésages (20) pour les éléments de fixation (18).

5. Unité de palier (2) selon la revendication 4, **caractérisée en ce que** les alésages (20) présentent un logement de tête de vis (22) dont la base (24) forme une butée pour une tête de vis (26).

6. Unité de palier (2) selon la revendication 5, **caractérisée en ce qu'**une profondeur (T) du logement de tête de vis (22) est supérieure à une hauteur (H) de la tête de vis (26).

7. Unité de palier (2) selon l'une quelconque des revendications précédentes,
**caractérisée en ce que** la bague de palier (8, 10) présente, au niveau de son côté frontal (14), des logements (28) pour les éléments de fixation (18).

8. Unité de palier (2) selon l'une quelconque des revendications précédentes,
**caractérisée en ce que** les éléments de fixation (18) sont fixés sur la bague de palier (8, 10) pour empêcher un desserrage.

9. Unité de palier (2) selon l'une quelconque des revendications précédentes,
**caractérisée en ce qu'**au moins sur un côté périphérique extérieur de la bague de palier extérieure (10) est appliqué un revêtement réduisant les frottements.
